# EUROPEAN PATENT APPLICATION

(11) **EP 4 534 179 A1**
(43) Date of publication of application: **09.04.2025**
(21) Application number: 22944786.7
(22) Date of filing: 31.05.2022
(51) Int. Cl.: B01D 53/12

(54) **CARBON DIOXIDE RECOVERY APPARATUS AND CARBON DIOXIDE RECOVERY METHOD**

(71) Applicant: MITSUBISHI ELECTRIC CORPORATION, Chiyoda-ku Tokyo 100-8310 (JP)
(72) Inventor: TANISHIMA, Makoto, Tokyo 100-8310 (JP); INOUE, Takumi, Tokyo 100-8310 (JP); FUKUI, Tomoya, Tokyo 100-8310 (JP); ONAKA, Yoji, Tokyo 100-8310 (JP); SHINOKI, Toshio, Tokyo 100-8310 (JP); KAWAMOTO, Makoto, Tokyo 100-8310 (JP)
(74) Representative: Meissner Bolte Partnerschaft mbB
(86) International application number: PCT/JP2022/022032
(87) International publication number: WO 2023/233497

(57) **Abstract**

The carbon dioxide recovery apparatus according to the present invention is a carbon dioxide recovery apparatus that is configured to recover carbon dioxide contained in air flowing through at least one of a first air flow passage and a second air flow passage, the carbon dioxide recovery apparatus includes an adsorbent that is configured to adsorb carbon dioxide; a separation unit that is configured to separate the carbon dioxide adsorbed onto the adsorbent; a measurement unit that is configured to measure a parameter which contributes to an adsorption efficiency of carbon dioxide by the adsorbent in air; a first transport path through which the adsorbent is transported via the first air flow passage and the separation unit; a second transport path through which the adsorbent is transported via the second air flow passage and the separation unit; a switching unit that is configured to switch a state in which the adsorbent is transported through the first transport path, a state in which the adsorbent is transported through the second transport path, and a state in which the adsorbent is transported through both the first transport path and the second transport path; a control unit that is configured to control the switching unit based on a measurement result of the measurement unit; and a recovery unit that is configured to recover the carbon dioxide separated by the separation unit.

## Description

### Technical Field

The present invention relates to a carbon dioxide recovery apparatus and a carbon dioxide recovery method.

### Background Art

Patent Document 1 discloses a technology of removing carbon dioxide in air by using an adsorbent capable of adsorbing carbon dioxide.

### Citation List

### Patent Document

| | |
|---|---|
| Patent Document 1: | Japanese Unexamined Patent Application, First Publication JP 2021 - 169 079 A |

### Summary of Invention

### Problem to be Solved by the Invention

It is required to efficiently recover carbon dioxide by the adsorbent.

In view of the above circumstances, the present invention is to provide a carbon dioxide recovery apparatus and a carbon dioxide recovery method capable of efficiently recovering carbon dioxide.

### Means to Solve the Problem

One aspect of the carbon dioxide recovery apparatus according to the present invention is a carbon dioxide recovery apparatus that is configured to recover carbon dioxide contained in air flowing through at least one of a first air flow passage and a second air flow passage, the carbon dioxide recovery apparatus includes an adsorbent that is configured to adsorb carbon dioxide; a separation unit that is configured to separate the carbon dioxide adsorbed onto the adsorbent; a measurement unit that is configured to measure a parameter which contributes to an adsorption efficiency of carbon dioxide by the adsorbent in air; a first transport path through which the adsorbent is transported via the first air flow passage and the separation unit; a second transport path through which the adsorbent is transported via the second air flow passage and the separation unit; a switching unit that is configured to switch between a state in which the adsorbent is transported through the first transport path, a state in which the adsorbent is transported through the second transport path, and a state in which the adsorbent is transported through both the first transport path and the second transport path; a control unit that is configured to control the switching unit based on a measurement result of the measurement unit; and a recovery unit that is configured to recover the carbon dioxide separated by the separation unit.

One aspect of a carbon dioxide recovery method according to the present invention is a carbon dioxide recovery method of recovering carbon dioxide contained in air flowing through at least one of a first air flow passage and a second air flow passage by using an adsorbent that is configured to adsorb carbon dioxide, the carbon dioxide recovery method includes a switching step of switching a transport path of the adsorbent between a state in which the adsorbent is transported through a first transport path via the first air flow passage, a state in which the adsorbent is transported through a second transport path via the second air flow passage, and a state in which the adsorbent is transported through both the first transport path and the second transport path, based on a measurement result of a parameter which contributes to an adsorption efficiency of carbon dioxide by the adsorbent in air; an adsorbing step of transporting the adsorbent through the transport path switched in the switching step and bringing the air flowing through the at least one air flow passage into contact with the adsorbent to adsorb carbon dioxide onto the adsorbent; a separation step of separating the carbon dioxide from the adsorbent which has adsorbed the carbon dioxide in the adsorbing step; and a recovering step of recovering the carbon dioxide separated in the separation step.

### Effects of the Invention

According to the present invention, it is possible to provide a carbon dioxide recovery apparatus and a carbon dioxide recovery method capable of efficiently recovering carbon dioxide.

### Brief Description of Drawings

FIG. 1 A schematic diagram of a carbon dioxide recovery system according to Embodiment 1.
FIG. 2 A flowchart describing a switching step of a carbon dioxide recovery method according to Embodiment 1.
FIG. 3 A flowchart describing a switching step of the carbon dioxide recovery method according to Embodiment 1.
FIG. 4 A schematic diagram of a carbon dioxide recovery system according to Embodiment 2.
FIG. 5 A schematic diagram of a carbon dioxide recovery system according to Embodiment 3.
FIG. 6 A schematic diagram of a carbon dioxide recovery system according to Embodiment 4.
FIG. 7 A schematic diagram of a carbon dioxide recovery system according to Embodiment 5.

### Description of Embodiments

Hereinafter, an embodiment of the present invention will be described with reference to the drawings. The scope of the present invention is not limited to the following embodiment, and can be changed in any way within the scope of the technical ideas of the present invention.

### Embodiment 1

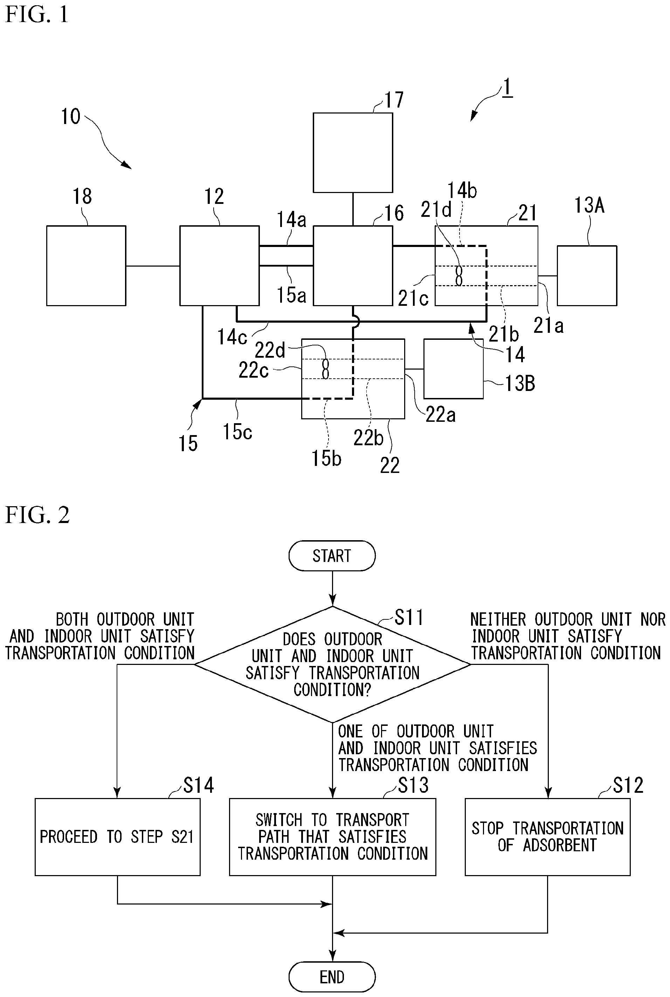

FIG. 1 is a schematic diagram showing a carbon dioxide recovery system 1 including a carbon dioxide recovery apparatus 10 according to Embodiment 1.

As shown in FIG. 1, the carbon dioxide recovery system 1 includes a carbon dioxide recovery apparatus 10, an outdoor unit 21 and an indoor unit 22 of an air conditioner.

The outdoor unit 21 is installed outdoors. The outdoor unit 21 includes a first air flow passage 21b formed in the outdoor unit 21, a first suction port 21a through which air is taken into the first air flow passage 21b, a first blowing port 21c from which the air that has flowed through the first air flow passage 21b is blown out, and a first blower 21d that forms a flow of the air in the first air flow passage 21b.

The indoor unit 22 is installed indoors. The indoor unit 22 includes a second air flow passage 22b formed in the indoor unit 22, a second suction port 22a through which air is taken into the second air flow passage 22b, a second blowing port 22c from which the air that has flowed through the second air flow passage 22b is blown out, and a second blower 22d that forms a flow of the air in the second air flow passage 22b.

The carbon dioxide recovery apparatus 10 recovers the carbon dioxide contained in the air flowing through at least one of the first air flow passage 21b and the second air flow passage 22b. The carbon dioxide recovery apparatus 10 includes an adsorbent, a separation unit 12, a first temperature and humidity sensor 13A, a second temperature and humidity sensor 13B, a first transport path 14, a second transport path 15, a switching unit 16, a control unit 17, and a recovery unit 18.

The adsorbent includes a material capable of adsorbing carbon dioxide. Examples of a material capable of adsorbing carbon dioxide include amine, zeolite, silica gel, diatomaceous earth, alumina, activated carbon, and the like. A plurality of materials may be selected and adopted from the above, or a material other than the above may be adopted. The adsorbent may have a granular shape (for example, bead shape (spherical) or pellet shape (cylindrical)). Alternatively, a powdery adsorbent may be adopted. In this case, the powdery adsorbent may be carried on a surface of a base material. The base material may have, for example, a honeycomb shape.

The separation unit 12 has a function of separating carbon dioxide from the adsorbent. The separation unit 12 may include a heater, and may separate carbon dioxide by heating (for example, 60 °C to 120 °C) the adsorbent. The heating temperature may be appropriately changed depending on the specific material of the adsorbent. Alternatively, the separation unit 12 may separate carbon dioxide by including a vacuum pump and placing the adsorbent under a reduced pressure condition.

The first temperature and humidity sensor 13A measures a temperature (hereinafter, also referred to as a first temperature) and a humidity (hereinafter, also referred to as a first humidity) of the first suction port 21a. A measurement result of the first temperature and humidity sensor 13A is output to the control unit 17.

The second temperature and humidity sensor 13B measures a temperature (hereinafter, also referred to as a second temperature) and a humidity (hereinafter, also referred to as a second temperature) of the second suction port 22a. A measurement result of the second temperature and humidity sensor 13B is output to the control unit 17.

The first temperature and humidity sensor 13A and the second temperature and humidity sensor 13B are examples of a measurement unit. The first temperature, the first humidity, the second temperature, and the second humidity are examples of parameters which contribute to an adsorption efficiency of carbon dioxide by the adsorbent in air. In the present invention, the first humidity and the second humidity refer to a relative humidity.

The first transport path 14 is a path for transporting the adsorbent via the first air flow passage 21b and the separation unit 12. The second transport path 15 is a path for transporting the adsorbent via the second air flow passage 22b and the separation unit 12. The adsorbent may be transported using, for example, a conveyor, a blower, or the like.

The first transport path 14 includes a first duct 14a, a second duct 14b, and a third duct 14c. The first duct 14a connects the separation unit 12 and the outdoor unit 21 via the switching unit 16. The second duct 14b is provided in the outdoor unit 21. The second duct 14b intersects the first air flow passage 21b. The second duct 14b may be provided inside the outdoor unit 21, or may be attached to the outdoor unit 21. The second duct 14b may be provided at a position where an air flow in the first air flow passage 21b is directed.

The second duct 14b connects the first duct 14a and the third duct 14c. The third duct 14c connects the outdoor unit 21 and the separation unit 12 without passing through the switching unit 16. In the first transport path 14, the adsorbent is transported from the separation unit 12 to the outdoor unit 21 through the first duct 14a, is transported to the outdoor unit 21 through the second duct 14b, and is returned to the separation unit 12 from the outdoor unit 21 through the third duct 14c.

The second transport path 15 includes a first duct 15a, a second duct 15b, and a third duct 15c. The first duct 15a connects the separation unit 12 and the indoor unit 22 via the switching unit 16. The second duct 15b is provided in the indoor unit 22. The second duct 15b intersects the second air flow passage 22b. The second duct 15b may be provided inside the indoor unit 22, or may be attached to the indoor unit 22. The second duct 15b may be provided at a position where an air flow in the second air flow passage 22b is directed. The second duct 15b connects the first duct 15a and the third duct 15c.

The third duct 15c connects the indoor unit 22 and the separation unit 12 without passing through the switching unit 16. In the second transport path 15, the adsorbent is transported from the separation unit 12 to the indoor unit 22 through the first duct 15a, is transported to the indoor unit 22 through the second duct 15b, and is returned to the separation unit 12 from the indoor unit 22 through the third duct 15c.

The switching unit 16 is provided in the first duct 14a of the first transport path 14 and the first duct 15a of the second transport path 15. The switching unit 16 switches between a state in which the adsorbent is transported through the first transport path 14, a state in which the adsorbent is transported through the second transport path 15, and a state in which the adsorbent is transported through both the first transport path 14 and the second transport path 15. The switching unit 16 includes, for example, a valve, and opens or blocks the first transport path 14 and the second transport path 15 by opening or closing the valve.

The measurement results of the first temperature and humidity sensor 13A and the second temperature and humidity sensor 13B are input to the control unit 17. The control unit 17 controls the switching unit 16 based on the measurement results of the first temperature and humidity sensor 13A and the second temperature and humidity sensor 13B. The control by the control unit 17 will be described below.

The recovery unit 18 is connected to the separation unit 12. The recovery unit 18 recovers the carbon dioxide separated by the separation unit 12. The recovery unit 18 has, for example, a methanation system having a function of generating methane using carbon dioxide, hydrogen, water, electric power, and the like. The recovery unit 18 may include a gas cylinder capable of storing carbon dioxide.

The carbon dioxide recovery method according to the present embodiment includes a switching step, an adsorbing step, a separation step, and a recovering step.

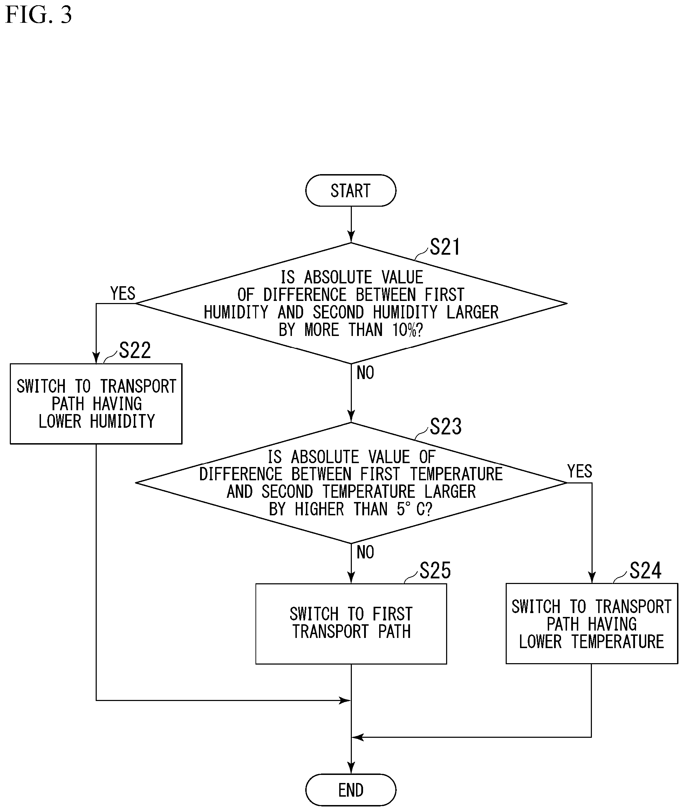

In the switching step, the control unit 17 controls the switching unit 16 based on the measurement results of the first temperature and humidity sensor 13A and the second temperature and humidity sensor 13B to switch the transport path of the adsorbent. The switching of the transport path will be described with reference to FIGS. 2 and 3.

As shown in FIG. 2, first, the control unit 17 determines whether or not a transportation condition of the adsorbent is satisfied for each of the outdoor unit 21 and the indoor unit 22 (step S11). It is determined that the transportation condition is satisfied in a case where a temperature of the suction port is 60 °C or lower and a humidity of the suction port is 60 % or less. In a case where the temperature of the suction port is higher than 60 °C or the humidity of the suction port is higher than 60 %, the adsorption efficiency of carbon dioxide by the adsorbent is deteriorated, and thus the adsorbent is not transported.

In a case in which neither the outdoor unit 21 nor the indoor unit 22 satisfies the transportation condition, the control unit 17 controls the switching unit 16 such that the transport of the adsorbent is not performed (that is, the transport of the adsorbent is stopped) through any of the first transport path 14 and the second transport path 15 (step S12).

In a case in which one of the outdoor unit 21 or the indoor unit 22 satisfies the transportation condition and the other does not satisfy the transportation condition, the control unit 17 controls the switching unit 16 to transport the adsorbent through the first transport path 14 or the second transport path 15 that satisfies the transportation condition (step S13).

In a case in which both the outdoor unit 21 and the indoor unit 22 satisfy the transportation condition, the process proceeds to step S21 shown in FIG. 3 (step S14). The control unit 17 determines whether or not an absolute value V1 of the difference between the first humidity of the first suction port 21a and the second humidity of the second suction port 22a is larger than 10 % (step S21). That is, in a case where the first humidity is denoted by M1 and the second humidity is denoted by M2, V1 = |M1 - M2|.

In a case in which the absolute value V1 is larger than 10 %, the control unit 17 determines which of the first humidity or the second humidity is lower, and controls the switching unit 16 to transport the adsorbent through the first transport path 14 or the second transport path 15 having a lower humidity (step S22). That is, in a case where the first humidity is lower than the second humidity by more than 10 %, the control unit 17 controls the switching unit 16 to switch the transport path of the adsorbent to the first transport path 14.

In a case where the second humidity is lower than the first humidity by more than 10 %, the control unit 17 controls the switching unit 16 to switch the transport path of the adsorbent to the second transport path 15. An adsorption performance of the adsorbent is higher as the humidity is lower. By transporting the adsorbent through the transport path having a lower humidity, the adsorption efficiency of carbon dioxide by the adsorbent is improved as compared with the transport path having a higher humidity.

In a case in which the absolute value V1 is 10 % or less, it is considered that the humidity of the suction port is substantially the same between the outdoor unit 21 and the indoor unit 22. In this case, the control unit 17 determines whether or not an absolute value V2 of the difference between the first temperature of the first suction port 21a and the second temperature of the second suction port 22a is higher than 5 °C (step S23). That is, in a case where the first temperature is denoted by T1 and the second temperature is denoted by T2, V2 = |T1 - T2|.

In a case in which the absolute value V2 is higher than 5 °C, the control unit 17 determines which of the first temperature or the second temperature is lower, and controls the switching unit 16 to transport the adsorbent through the first transport path 14 or the second transport path 15 in which the temperature is lower (step S24). That is, in a case where the first temperature is lower than the second temperature by higher than 5 °C the control unit 17 controls the switching unit 16 to switch the transport path of the adsorbent to the first transport path 14.

In a case where the second temperature is lower than the first temperature by higher than 5 °C, the control unit 17 controls the switching unit 16 to switch the transport path of the adsorbent to the second transport path 15. An adsorption performance of the adsorbent is higher as the temperature is lower. By transporting the adsorbent through the transport path having a lower temperature, the adsorption efficiency of carbon dioxide by the adsorbent is improved as compared with the transport path having a higher temperature.

In a case in which the absolute value V2 is 5 °C or lower, it is considered that the temperature of the suction port is substantially the same between the outdoor unit 21 and the indoor unit 22. In a case in which both the humidity and the temperature of the suction port are substantially the same between the outdoor unit 21 and the indoor unit 22, the control unit 17 controls the switching unit 16 to switch the transport path of the adsorbent to the first transport path 14 (step S25). Since the flow rate of the air in the first air flow passage 21b disposed outdoor space is larger than the flow rate of the air in the second air flow passage 22b disposed indoor space, an amount of the carbon dioxide to be recovered can be increased by transporting the adsorbent using the first transport path 14.

In the adsorbing step, the adsorbent is transported through the transport path switched in the switching step, and the air flowing through the first air flow passage 21b or the second air flow passage 22b is brought into contact with the adsorbent to adsorb carbon dioxide onto the adsorbent.

The first transport path 14 intersects the first air flow passage 21b in the outdoor unit 21. Therefore, in a case where the adsorbent is transported through the first transport path 14, the air flowing through the first air flow passage 21b is brought into contact with the adsorbent transported through the first transport path 14.

The second transport path 15 intersects the second air flow passage 22b in the indoor unit 22. Therefore, in a case where the adsorbent is transported through the second transport path 15, the air flowing through the second air flow passage 22b is brought into contact with the adsorbent transported through the second transport path 15.

In the separation step, the separation unit 12 separates carbon dioxide from the adsorbent which has adsorbed carbon dioxide. The separation unit 12 may separate carbon dioxide by heating the adsorbent. Alternatively, the separation unit 12 may separate carbon dioxide by placing the adsorbent under a reduced pressure condition. The separated carbon dioxide is transported to the recovery unit 18. The adsorbent from which the carbon dioxide has been separated is used again in the adsorbing step.

In the recovering step, the separated carbon dioxide is recovered by the recovery unit 18.

As described above, the carbon dioxide recovery apparatus 10 according to the present embodiment includes an adsorbent that adsorbs carbon dioxide; a separation unit 12 that separates the carbon dioxide adsorbed onto the adsorbent; a first temperature and humidity sensor 13A and a second temperature and humidity sensor 13B that measures a parameter which contributes to an adsorption efficiency of carbon dioxide by the adsorbent in air; a first transport path 14 through which the adsorbent is transported via the first air flow passage 21b and the separation unit 12; a second transport path 15 through which the adsorbent is transported via the second air flow passage 22b and the separation unit 12; a switching unit 16 that switches a state in which the adsorbent is transported through the first transport path 14, a state in which the adsorbent is transported through the second transport path 15, and a state in which the adsorbent is transported through both the first transport path 14 and the second transport path 15; a control unit 17 that controls the switching unit 16 based on a measurement result of the first temperature and humidity sensor 13A and the second temperature and humidity sensor 13B; and a recovery unit 18 that recovers the carbon dioxide separated by the separation unit 12.

In addition, the carbon dioxide recovery method according to the present embodiment includes a switching step of switching a transport path of an adsorbent between a state in which the adsorbent is transported through the first transport path 14, a state in which the adsorbent is transported through the second transport path 15, and a state in which the adsorbent is transported through both the first transport path 14 and the second transport path 15 based on a measurement result of a parameter which contributes to an adsorption efficiency of carbon dioxide by the adsorbent in air, an adsorbing step of transporting the adsorbent through the transport path switched in the switching step and bringing the air flowing through at least one of the first air flow passage 21b and the second air flow passage 22b into contact with the adsorbent to adsorb the carbon dioxide onto the adsorbent, a separation step of separating the carbon dioxide from the adsorbent which has adsorbed the carbon dioxide in the adsorbing step, and a recovering step of recovering the carbon dioxide separated in the separation step.

According to such the carbon dioxide recovery apparatus 10 or the carbon dioxide recovery method, the carbon dioxide can be efficiently recovered by switching the transport path of the adsorbent based on the measurement result of the parameter which contributes to the adsorption efficiency of carbon dioxide by the adsorbent in the air.

In addition, the first air flow passage 21b is provided in the outdoor unit 21, and the second air flow passage 22b is provided in the indoor unit 22. The control unit 17 controls the switching unit 16 based on the measurement result of first temperature and humidity sensor 13A that measures the first temperature and the first humidity of the first suction port 21a and the second temperature and humidity sensor 13B that measures the second temperature and the second humidity of the second suction port 22a.

In many cases, a temperature and a humidity of air are different between the outdoor space and the indoor space. The adsorption performance of the adsorbent is affected by the temperature and humidity of the air. By switching the transport path of the adsorbent based on the measurement results of the first temperature and humidity sensor 13A and the second temperature and humidity sensor 13B, the recovery efficiency of carbon dioxide can be further improved.

In addition, in a case in which the first temperature and the second temperature are 60 °C or higher and the first humidity and the second humidity are 60 % or larger, the control unit 17 controls the switching unit 16 to stop transportation of the adsorbent.

In a case where the first temperature and the second temperature are 60 °C or higher and the first humidity and the second humidity are 60 % or larger, the adsorption efficiency of carbon dioxide by the adsorbent is deteriorated. In such a case, by stopping the transportation of the adsorbent and not adsorbing carbon dioxide with the adsorbent, it is possible to save the power for transporting the adsorbent and to achieve power saving.

In addition, in a case in which the first temperature and the second temperature are substantially the same as each other, and the first humidity and the second humidity are substantially the same as each other, the control unit 17 controls the switching unit 16 to transport the adsorbent through the first transport path 14. In the present invention, in a case in which the absolute value V2 of the difference between the first temperature and the second temperature is 5 °C or lower, the first temperature and the second temperature are regarded as substantially the same as each other. In a case in which the absolute value V1 of the difference between the first humidity and the second humidity is 10 % or less, the first humidity and the second humidity are considered to be substantially the same as each other.

The flow rate of the air in the first air flow passage 21b is larger than the flow rate of the air in the second air flow passage 22b. Therefore, in a case in which the first temperature and the second temperature are substantially the same as each other and the first humidity and the second humidity are substantially the same as each other, the amount of carbon dioxide to be recovered can be increased by transporting the adsorbent using the first transport path 14.

### Embodiment 2

Next, a carbon dioxide recovery system 1 including a carbon dioxide recovery apparatus 10 according to Embodiment 2 will be described. Since the basic configuration of the carbon dioxide recovery system 1 according to the present embodiment is the same as that of Embodiment 1, the carbon dioxide recovery system 1 will be described with the difference as a main point.

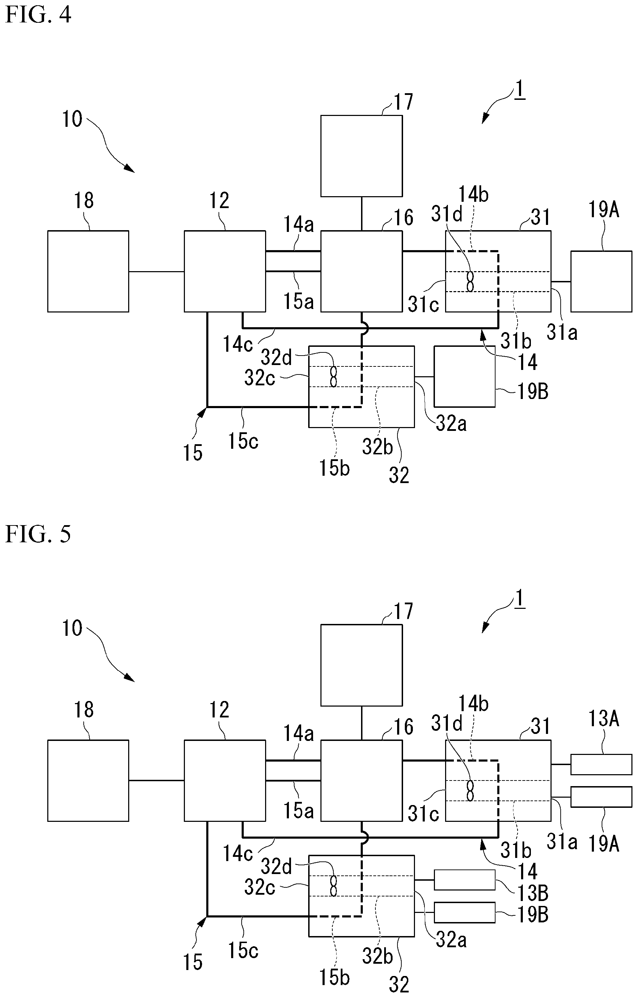

As shown in FIG. 4, the carbon dioxide recovery system 1 according to the present embodiment includes a carbon dioxide recovery apparatus 10, a first indoor unit 31, and a second indoor unit 32. The first indoor unit 31 and the second indoor unit 32 may be installed in the same room or may be installed in different rooms.

The first indoor unit 31 is installed indoors. The first indoor unit 31 is, for example, a heating and cooling machine. The first indoor unit 31 includes a first air flow passage 31b formed in the first indoor unit 31, a first suction port 31a through which air is taken into the first air flow passage 31b, a first blowing port 31c from which the air that has flowed through the first air flow passage 31b is blown out, and a first blower 31d that forms a flow of the air in the first air flow passage 31b.

The second indoor unit 32 is installed indoors. The second indoor unit 32 is, for example, a heating and cooling machine. The second indoor unit 32 includes a second air flow passage 32b formed in the second indoor unit 32, a second suction port 32a through which air is taken into the second air flow passage 32b, a second blowing port 32c from which the air that has flowed through the second air flow passage 32b is blown out, and a second blower 32d that forms a flow of the air in the second air flow passage 32b.

The carbon dioxide recovery apparatus 10 recovers the carbon dioxide contained in the air flowing through at least one of the first air flow passage 31b and the second air flow passage 32b. The carbon dioxide recovery apparatus 10 includes an adsorbent, a separation unit 12, a first carbon dioxide sensor 19A, a second carbon dioxide sensor 19B, a first transport path 14, a second transport path 15, a switching unit 16, a control unit 17, and a recovery unit 18.

The first carbon dioxide sensor 19A measures a carbon dioxide concentration (hereinafter, also referred to as a first carbon dioxide concentration) of the first suction port 31a. A measurement result of the first carbon dioxide sensor 19A is output to the control unit 17.

The second carbon dioxide sensor 19B measures a carbon dioxide concentration (hereinafter, also referred to as a second carbon dioxide concentration) of the second suction port 32a. A measurement result of the second carbon dioxide sensor 19B is output to the control unit 17.

The first carbon dioxide sensor 19A and the second carbon dioxide sensor 19B are examples of a measurement unit. The first carbon dioxide concentration and the second carbon dioxide concentration are examples of parameters which contribute to an adsorption efficiency of carbon dioxide by the adsorbent in air.

The carbon dioxide recovery method according to the present embodiment includes a switching step, an adsorbing step, a separation step, and a recovering step. The carbon dioxide recovery method according to the present embodiment is different from Embodiment 1 in the switching of the transport path in the switching step.

That is, in the present embodiment, in the switching step, the control unit 17 controls the switching unit 16 based on the measurement results of the first carbon dioxide sensor 19A and the second carbon dioxide sensor 19B to switch the transport path of the adsorbent.

Specifically, the control unit 17 determines which of the first carbon dioxide concentration of the first suction port 31a or the second carbon dioxide concentration of the second suction port 32a is higher, and controls the switching unit 16 to transport the adsorbent through the first transport path 14 or the second transport path 15 in which the carbon dioxide concentration is higher.

In the present embodiment, the first air flow passage 31b is provided in the first indoor unit 31, and the second air flow passage 32b is provided in the second indoor unit 32. The control unit 17 controls the switching unit 16 based on measurement results of the first carbon dioxide sensor 19A that measures the first carbon dioxide concentration of the first suction port 31a and the second carbon dioxide sensor 19B that measures the second carbon dioxide concentration of the second suction port 32a.

In many cases, the first indoor unit 31 and the second indoor unit 32 installed in the indoor space have substantially the same temperature and humidity of the air at the suction port. Based on the measurement results of the first carbon dioxide sensor 19A and the second carbon dioxide sensor 19B, the transport path of the adsorbent is switched, so that the carbon dioxide can be more efficiently recovered from the air having a high carbon dioxide concentration.

### Embodiment 3

Next, a carbon dioxide recovery system 1 including a carbon dioxide recovery apparatus 10 according to Embodiment 3 will be described. Since the basic configuration of the carbon dioxide recovery system 1 according to the present embodiment is the same as that of Embodiment 2, the carbon dioxide recovery system 1 will be described with the difference as a main point.

As shown in FIG. 5, the carbon dioxide recovery system 1 according to the present embodiment includes a carbon dioxide recovery apparatus 10, a first indoor unit 31, and a second indoor unit 32. The carbon dioxide recovery apparatus 10 includes an adsorbent, a separation unit 12, a first temperature and humidity sensor 13A, a second temperature and humidity sensor 13B, a first carbon dioxide sensor 19A, a second carbon dioxide sensor 19B, a first transport path 14, a second transport path 15, a switching unit 16, a control unit 17, and a recovery unit 18.

The first temperature and humidity sensor 13A measures a first temperature and a first humidity of a first suction port 31a. A measurement result of the first temperature and humidity sensor 13A is output to the control unit 17.

The second temperature and humidity sensor 13B measures a second temperature and a second humidity of a second suction port 32a. A measurement result of the second temperature and humidity sensor 13B is output to the control unit 17.

The carbon dioxide recovery method according to the present embodiment includes a switching step, an adsorbing step, a separation step, and a recovering step. The carbon dioxide recovery method according to the present embodiment is different from Embodiments 1 and 2 in the switching of the transport path in the switching step.

There is a case where the first indoor unit 31 and the second indoor unit 32 are installed in different rooms, and heating operation is performed by the first indoor unit 31 and cooling operation is performed by the second indoor unit 32. In such a case, the temperature and the humidity may be different between the first suction port 31a and the second suction port 32a. It should be noted that, in the present embodiment, the first indoor unit 31 may be a heating and cooling machine or may be a heating machine. The second indoor unit 32 may be a heating and cooling machine or may be a cooling machine. The first indoor unit 31 and the second indoor unit 32 may be a part of a common air conditioner or may be a part of different air conditioners.

In the present embodiment, in the switching step, the control unit 17 controls the switching unit 16 based on the measurement results of the first temperature and humidity sensor 13A, the second temperature and humidity sensor 13B, the first carbon dioxide sensor 19A, and the second carbon dioxide sensor 19B in a case where the heating operation is performed by the first indoor unit 31 and the cooling operation is performed by the second indoor unit 32, to switch the transport path of the adsorbent.

First, the control unit 17 determines whether or not the temperature of the suction port is 60 °C or lower for each of the first indoor unit 31 and the second indoor unit 32.

In a case in which the temperature of the suction port is higher than 60 °C in both the first indoor unit 31 and the second indoor unit 32, the control unit 17 controls the switching unit 16 such that the transportation of the adsorbent is not performed (that is, the transportation of the adsorbent is stopped) through any of the first transport path 14 and the second transport path 15.

In a case in which the temperature of the suction port is 60 °C or lower in any one of the first indoor unit 31 or the second indoor unit 32 and the temperature of the suction port is higher than 60 °C in the other, the control unit 17 controls the switching unit 16 to transport the adsorbent through the first transport path 14 or the second transport path 15 in which the temperature of the suction port is 60 °C or lower.

In both the first indoor unit 31 and the second indoor unit 32, in a case in which the temperature of the suction port is 60 °C or lower, the control unit 17 determines whether or not an absolute value V3 of a difference between the first carbon dioxide concentration of the first suction port 31a and the second carbon dioxide concentration of the second suction port 32a is larger than 100 ppm (volume basis; hereinafter, the same applies to the present invention). That is, in a case where the first carbon dioxide concentration is denoted by C1 and the second carbon dioxide concentration is denoted by C2, V3 = |C1 - C2|.

In a case in which the absolute value V3 is larger than 100 ppm, the control unit 17 determines which of the first carbon dioxide concentration or the second carbon dioxide concentration is higher, and controls the switching unit 16 to transport the adsorbent through the first transport path 14 or the second transport path 15 in which the carbon dioxide concentration is higher.

That is, in a case in which the first carbon dioxide concentration is higher than the second carbon dioxide concentration by more than 100 ppm, the control unit 17 controls the switching unit 16 to switch the transport path of the adsorbent to the first transport path 14. In a case in which the second carbon dioxide concentration is higher than the first carbon dioxide concentration by more than 100 ppm, the control unit 17 controls the switching unit 16 to switch the transport path of the adsorbent to the second transport path 15.

In a case in which the absolute value V3 is 100 ppm or less, it is considered that the carbon dioxide concentration of the suction port is substantially the same between the first indoor unit 31 and the second indoor unit 32. In this case, the control unit 17 determines which of the first humidity of the first suction port 31a or the second humidity of the second suction port 32a is lower, and controls the switching unit 16 to transport the adsorbent through the first transport path 14 or the second transport path 15 in which the humidity is lower.

In the present embodiment, in a case in which the heating operation is performed by the first indoor unit 31 and the cooling operation is performed by the second indoor unit 32, the control unit 17 controls the switching unit 16 based on the measurement results of the first carbon dioxide sensor 19A, the second carbon dioxide sensor 19B, the first temperature and humidity sensor 13A, and the second temperature and humidity sensor 13B.

In a case in which the heating operation is performed by the first indoor unit 31 and the cooling operation is performed by the second indoor unit 32, the carbon dioxide can be more efficiently recovered by switching the transport path of the adsorbent based on the measurement results of the first carbon dioxide sensor 19A, the second carbon dioxide sensor 19B, the first temperature and humidity sensor 13A, and the second temperature and humidity sensor 13B.

### Embodiment 4

Next, a carbon dioxide recovery system 1 including a carbon dioxide recovery apparatus 10 according to Embodiment 4 will be described. Since the basic configuration of the carbon dioxide recovery system 1 according to the present embodiment is the same as that of Embodiment 1, the carbon dioxide recovery system 1 will be described with the difference as a main point.

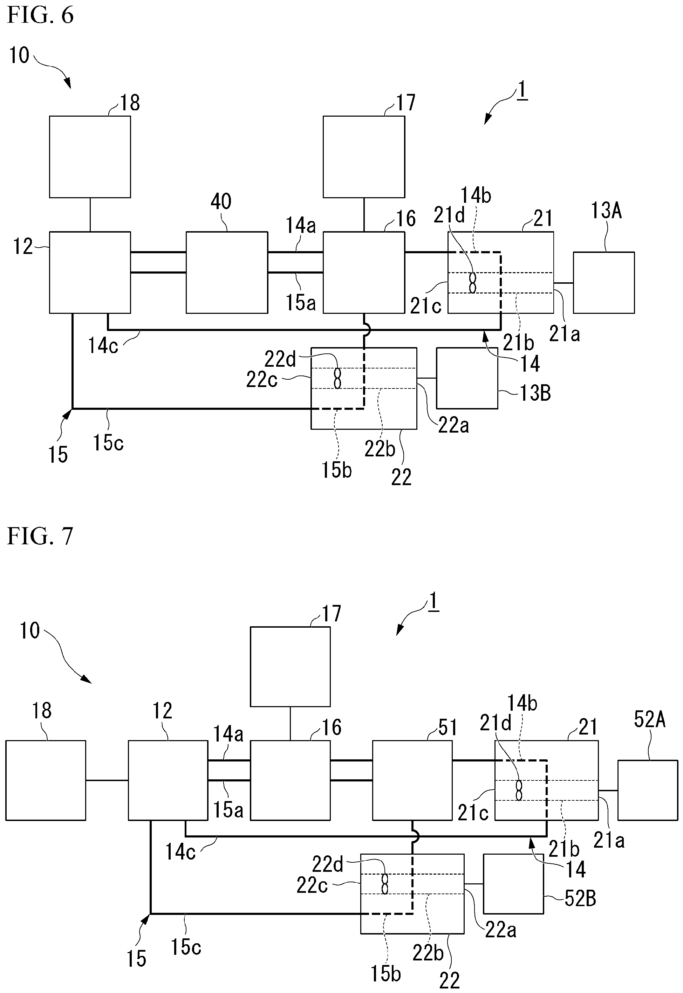

As shown in FIG. 6, the carbon dioxide recovery system 1 according to the present embodiment includes a carbon dioxide recovery apparatus 10, an outdoor unit 21, and an indoor unit 22. The carbon dioxide recovery apparatus 10 includes an adsorbent, a separation unit 12, a first temperature and humidity sensor 13A, a second temperature and humidity sensor 13B, a first transport path 14, a second transport path 15, a switching unit 16, a control unit 17, a recovery unit 18, and a storage unit 40.

The storage unit 40 is provided between the separation unit 12 and the switching unit 16. The storage unit 40 stores the adsorbent from which the carbon dioxide is separated by the separation unit 12. The storage unit 40 is configured to store an amount of the adsorbent that allows the adsorbing step to be performed a plurality of times. The storage unit 40 includes an entrance for carrying in the adsorbent and an exit for transporting the adsorbent. The storage unit 40 is a container that is sealed so that humidity in the atmosphere is not adsorbed.

The carbon dioxide recovery method according to the present embodiment includes a switching step, an adsorbing step, a separation step, a storage step, and a recovering step.

In the storage step, the storage unit 40 stores the adsorbent from which the carbon dioxide has been separated in the separation step.

In the carbon dioxide recovery method according to the present embodiment, in a case where the first adsorbing step is completed, the adsorbent which has adsorbed the carbon dioxide is transported to the separation unit 12, and the separation step is performed. At the same time, the adsorbent for the second time is transported from the storage unit 40 to the first transport path 14 or the second transport path 15, and the second adsorbing step is performed. As a result, the adsorbing step and the separation step can be performed at the same time.

The carbon dioxide recovery apparatus 10 according to the present embodiment further includes a storage unit 40 that stores the adsorbent.

In addition, the carbon dioxide recovery method according to the present embodiment further includes a storage step of storing, in the storage unit 40, the adsorbent from which the carbon dioxide is separated in the separation step, and the adsorbing step and the separation step are performed at the same time using the adsorbent stored in the storage unit 40.

Since the adsorbing step and the separation step can be performed at the same time, the recovery efficiency of carbon dioxide is further improved.

### Embodiment 5

Next, a carbon dioxide recovery system 1 including a carbon dioxide recovery apparatus 10 according to Embodiment 5 will be described. Since the basic configuration of the carbon dioxide recovery system 1 according to the present embodiment is the same as that of Embodiment 1, the carbon dioxide recovery system 1 will be described with the difference as a main point.

As shown in FIG. 7, the carbon dioxide recovery system 1 according to the present embodiment includes a carbon dioxide recovery apparatus 10, an outdoor unit 21, and an indoor unit 22. The carbon dioxide recovery apparatus 10 includes an adsorbent, a separation unit 12, a first transport path 14, a second transport path 15, a switching unit 16, a control unit 17, a recovery unit 18, a moisture adsorption unit 51, a first temperature sensor 52A, and a second temperature sensor 52B.

The moisture adsorption unit 51 is a dehumidifying agent that adsorbs moisture in the air. The moisture adsorption unit 51 is, for example, a desiccant rotor that is disposed across the first duct 14a and the first duct 15a. In the first duct 14a, the moisture adsorption unit 51 is disposed between the switching unit 16 and the outdoor unit 21. In the first duct 15a, the moisture adsorption unit 51 is disposed between the switching unit 16 and the indoor unit 22. The moisture adsorption unit 51 may be disposed between the separation unit 12 and the switching unit 16 in the first duct 14a and the first duct 15a.

The first temperature sensor 52A measures a temperature of the first suction port 21a (hereinafter, also referred to as a first temperature). A measurement result of the first temperature sensor 52A is output to the control unit 17.

The second temperature sensor 52B measures the temperature of the second suction port 22a (hereinafter, also referred to as a second temperature). A measurement result of the second temperature sensor 52B is output to the control unit 17.

The first temperature sensor 52A and the second temperature sensor 52B are examples of a measurement unit.

The carbon dioxide recovery method according to the present embodiment includes a switching step, an adsorbing step, a separation step, and a recovering step.

In the present embodiment, in the adsorbing step, the adsorbent is transported to the first transport path 14 or the second transport path 15 in a state where the air flowing through the first transport path 14 and the second transport path 15 is dehumidified by the moisture adsorption unit 51, to adsorb the carbon dioxide onto the adsorbent. As a result, the adsorption performance of the adsorbent can be improved as compared with a case where the moisture adsorption unit 51 is not provided.

In addition, in the present embodiment, since the air flowing through the first transport path 14 and the second transport path 15 is dehumidified by the moisture adsorption unit 51, in the switching step, the control unit 17 controls the switching unit 16 based on the measurement results of the first temperature sensor 52A and the second temperature sensor 52B to switch the transport path of the adsorbent.

First, the control unit 17 determines whether or not the temperature of the suction port is 60 °C or lower for each of the outdoor unit 21 and the indoor unit 22.

In a case in which the temperature of the suction port is higher than 60 °C in both the outdoor unit 21 and the indoor unit 22, the control unit 17 controls the switching unit 16 such that the transportation of the adsorbent is not performed (that is, the transportation of the adsorbent is stopped) through any of the first transport path 14 and the second transport path 15.

In a case in which the temperature of the suction port is 60 °C or lower in any one of the outdoor unit 21 or the indoor unit 22 and the temperature of the suction port is higher than 60 °C in the other, the control unit 17 controls the switching unit 16 to transport the adsorbent through the first transport path 14 or the second transport path 15 in which the temperature of the suction port is 60 °C or lower.

In a case in which the temperature of the suction port is 60 °C or lower in both the outdoor unit 21 and the indoor unit 22, the control unit 17 determines whether or not the absolute value V2 of the difference between the first temperature of the first suction port 21a and the second temperature of the second suction port 22a is higher than 5 °C.

In a case in which the absolute value V2 is higher than 5 °C, the control unit 17 determines which of the first temperature or the second temperature is lower, and controls the switching unit 16 to transport the adsorbent through the first transport path 14 or the second transport path 15 in which the temperature is lower.

In a case in which the absolute value V2 is 5 °C or lower, it is considered that the temperature of the suction port is substantially the same between the outdoor unit 21 and the indoor unit 22. In a case in which both the humidity and the temperature of the suction port are substantially the same between the outdoor unit 21 and the indoor unit 22, the control unit 17 controls the switching unit 16 to switch the transport path of the adsorbent to the first transport path 14.

The carbon dioxide recovery apparatus according to the present embodiment further includes a moisture adsorption unit 51 that adsorbs moisture in the air flowing through the first transport path 14 and the second transport path 15. The control unit 17 controls the switching unit 16 based on the measurement result of the first temperature sensor 52A that measures the first temperature of the first suction port 21a and the measurement result of the second temperature sensor 52B that measures the second temperature of the second suction port 22a.

The moisture adsorption unit 51 can improve the adsorption performance of the adsorbent by adsorbing the moisture of the air flowing through the first transport path 14 and the second transport path 15. In addition, by switching the transport path of the adsorbent between the first transport path 14 and the second transport path 15 based on the measurement results of the first temperature sensor 52A and the second temperature sensor 52B, carbon dioxide can be efficiently recovered.

However, the technical scope of the present invention is not limited to the above embodiments, and various modifications can be made without departing from the gist of the present invention.

In Embodiments 1,4, and 5, the second air flow passage 22b may be provided in the ventilation system. In this case, the ventilation system includes, for example, a second air flow passage 22b formed in the ventilation system, a suction port through which air is taken into the second air flow passage 22b, a blowing port from which the air that has flowed through the second air flow passage 22b is blown out, and a ventilating fan that forms a flow of air in the second air flow passage 22b.

In the switching step in the embodiment described above, threshold values of the temperature, the humidity, and the carbon dioxide concentration of the suction port used for switching the transport path are merely examples, and may be appropriately changed according to a specific material of the adsorbent and the like.

In Embodiment 3, similarly to Embodiment 1, the control unit 17 may determine whether or not the transportation condition of the adsorbent is satisfied for each of the first indoor unit 31 and the second indoor unit 32.

In addition, the above-described embodiments or modification examples may be appropriately combined.

For example, the storage unit 40 of Embodiment 4 may be provided in the carbon dioxide recovery apparatus 10 according to Embodiments 1 to 3, and 5. In this case, for example, in Embodiment 1, in a case in which both the outdoor unit 21 and the indoor unit 22 satisfy the transportation condition, the control unit 17 may control the switching unit 16 to transport the adsorbent through both the first transport path 14 and the second transport path 15.

In addition, in Embodiments 2 and 3, in a case in which the carbon dioxide concentration of the suction port is substantially the same between the first indoor unit 31 and the second indoor unit 32, the control unit 17 may control the switching unit 16 to transport the adsorbent through both the first transport path 14 and the second transport path 15. In Embodiment 5, in a case in which the temperature of the suction port is 60 °C or lower in both the outdoor unit 21 and the indoor unit 22, the control unit 17 may control the switching unit 16 to transport the adsorbent through both the first transport path 14 and the second transport path 15.

As a result, since carbon dioxide can be adsorbed at a plurality of places at the same time, carbon dioxide can be recovered more efficiently.

It should be noted that the control unit 17 described above has a computer system inside. A program for realizing the functions of each configuration of the above-described carbon dioxide recovery system 1 may be recorded on a computer-readable recording medium, the program recorded on the recording medium may be read into a computer system, and the program may be executed to perform processing in the above-described control unit 17. In addition, hardware other than the control unit 17 may perform the above-described processing.

Here, the "the program recorded on the recording medium may be read into a computer system, and the program may be executed" includes installing the program in the computer system. Here, it is assumed that the term "computer system" described here includes an OS and hardware such as a peripheral device.

In addition, the "computer system" may include a plurality of computer devices connected via a network including a communication line such as the Internet or a WAN, a LAN, and a dedicated line. In addition, the "computer-readable recording medium" refers to a portable medium such as a flexible disk, a magneto-optical disk, a ROM, and a CD-ROM, and a storage device such as a hard disk built in the computer system. As described above, the recording medium in which the program is stored may be a non-transitory recording medium such as a CD-ROM.

In addition, the recording medium also includes a recording medium provided internally or externally which is accessible from a distribution server for distributing the program. It should be noted that the program may be divided into a plurality of programs and may be downloaded at different timings and then combined by each configuration provided in the carbon dioxide recovery system 1, or a distribution server that distributes each divided program may be different. Further, the "computer-readable recording medium" also includes a recording medium that holds the program for a certain period of time such as a volatile memory (RAM) inside the computer system such as a server or a client in a case in which a program is transmitted via a network. In addition, the program may be a program for realizing some of the functions described above. Further, the program may be a so-called difference file (difference program) capable of realizing the functions described above in combination with a program recorded in advance in the computer system.

### Reference Signs List

10: Carbon dioxide recovery apparatus
12: Separation unit
13A: First temperature and humidity sensor (measurement unit)
13B: Second temperature and humidity sensor (measurement unit)
14: First transport path
15: Second transport path
16: Switching unit
17: Control unit
18: Recovery unit
19A: First carbon dioxide sensor (measurement unit)
19B: Second carbon dioxide sensor (measurement unit)
21: Outdoor unit
21a: First suction port (suction port)
21b: First air flow passage
22: Indoor unit
22a: Second suction port (suction port)
22b: Second air flow passage
31: First indoor unit
31a: First suction port (suction port)
31b: First air flow passage
32: Second indoor unit
32a: Second suction port (suction port)
32b: Second air flow passage
40: Storage unit
51: Moisture adsorption unit
52A: First temperature sensor (measurement unit)
52B: Second temperature sensor (measurement unit)

## Claims

1. A carbon dioxide recovery apparatus that is configured to recover carbon dioxide contained in air flowing through at least one of a first air flow passage and a second air flow passage, the carbon dioxide recovery apparatus comprising:
- an adsorbent that is configured to adsorb carbon dioxide;
- a separation unit that is configured to separate the carbon dioxide adsorbed onto the adsorbent;
- a measurement unit that is configured to measure a parameter which contributes to an adsorption efficiency of carbon dioxide by the adsorbent in air;
- a first transport path through which the adsorbent is transported via the first air flow passage and the separation unit;
- a second transport path through which the adsorbent is transported via the second air flow passage and the separation unit;
- a switching unit that is configured to switch between a state in which the adsorbent is transported through the first transport path, a state in which the adsorbent is transported through the second transport path, and a state in which the adsorbent is transported through both the first transport path and the second transport path;
- a control unit that is configured to control the switching unit based on a measurement result of the measurement unit; and
- a recovery unit that is configured to recover the carbon dioxide separated by the separation unit.

2. The carbon dioxide recovery apparatus according to Claim 1,
wherein the first air flow passage is provided in an outdoor unit,
the second air flow passage is provided in an indoor unit,
the measurement unit includes a first temperature and humidity sensor that is configured to measure a first temperature and a first humidity of a first suction port through which air is taken into the first air flow passage and a second temperature and humidity sensor that is configured to measure a second temperature and a second humidity of a second suction port through which air is taken into the second air flow passage, and
the control unit controls the switching unit based on measurement results of the first temperature and humidity sensor and the second temperature and humidity sensor.

3. The carbon dioxide recovery apparatus according to Claim 1,
wherein the first air flow passage is provided in a first indoor unit,
the second air flow passage is provided in a second indoor unit,
the measurement unit includes a first carbon dioxide sensor that is configured to measure a carbon dioxide concentration of a first suction port through which air is taken into the first air flow passage and a second carbon dioxide sensor that is configured to measure a carbon dioxide concentration of a second suction port through which air is taken into the second air flow passage, and
the control unit controls the switching unit based on measurement results of the first carbon dioxide sensor and the second carbon dioxide sensor.

4. The carbon dioxide recovery apparatus according to Claim 3,
wherein the measurement unit further includes a first temperature and humidity sensor that is configured to measure a temperature and a humidity of the first suction port and a second temperature and humidity sensor that is configured to measure a temperature and a humidity of the second suction port, and
the control unit controls the switching unit based on measurement results of the first carbon dioxide sensor, the second carbon dioxide sensor, the first temperature and humidity sensor, and the second temperature and humidity sensor in a case in which a heating operation is performed by the first indoor unit and a cooling operation is performed by the second indoor unit.

5. The carbon dioxide recovery apparatus according to any one of Claims 1 to 4, further comprising:
a storage unit that is configured to store the adsorbent.

6. The carbon dioxide recovery apparatus according to Claim 1,
further comprising:
- a moisture adsorption unit that is configured to adsorb moisture of air flowing through the first transport path and the second transport path,
wherein the first air flow passage is provided in an outdoor unit,
the second air flow passage is provided in an indoor unit,
the measurement unit includes a first temperature sensor that is configured to measure a temperature of a first suction port through which air is taken into the first air flow passage and a second temperature sensor that is configured to measure a temperature of a second suction port through which air is taken into the second air flow passage, and
the control unit controls the switching unit based on measurement results of the first temperature sensor and the second temperature sensor.

7. The carbon dioxide recovery apparatus according to Claim 1,
wherein the measurement unit includes a first temperature and humidity sensor that is configured to measure a first temperature and a first humidity of a first suction port through which air is taken into the first air flow passage and a second temperature and humidity sensor that is configured to measure a second temperature and a second humidity of a second suction port through which air is taken into the second air flow passage, and the control unit controls the switching unit to stop transportation of the adsorbent in a case in which the first temperature and the second temperature are 60 °C or higher and the first humidity and the second humidity are 60 % or larger.

8. The carbon dioxide recovery apparatus according to Claim 1,
wherein the measurement unit includes a first temperature and humidity sensor that is configured to measure a first temperature and a first humidity of a first suction port through which air is taken into the first air flow passage and a second temperature and humidity sensor that is configured to measure a second temperature and a second humidity of a second suction port through which air is taken into the second air flow passage, and the control unit controls the switching unit to transport the adsorbent through the first transport path in a case in which the first temperature and the second temperature are substantially the same as each other and the first humidity and the second humidity are substantially the same as each other.

9. The carbon dioxide recovery apparatus according to Claim 1,
wherein the first air flow passage is provided in an outdoor unit, the second air flow passage is provided in a ventilation system,
the measurement unit includes a first temperature and humidity sensor that is configured to measure a first temperature and a first humidity of a first suction port through which air is taken into the first air flow passage and a second temperature and humidity sensor that is configured to measure a second temperature and a second humidity of a second suction port through which air is taken into the second air flow passage, and
the control unit controls the switching unit based on measurement results of the first temperature and humidity sensor and the second temperature and humidity sensor.

10. The carbon dioxide recovery apparatus according to Claim 1,
further comprising:
- a moisture adsorption unit that is configured to adsorb moisture of air flowing through the first transport path and the second transport path,
wherein the first air flow passage is provided in an outdoor unit,
the second air flow passage is provided in a ventilation system,
the measurement unit includes a first temperature sensor that is configured to measure a temperature of a first suction port through which air is taken into the first air flow passage and a second temperature sensor that is configured to measure a temperature of a second suction port through which air is taken into the second air flow passage, and
the control unit controls the switching unit based on measurement results of the first temperature sensor and the second temperature sensor.

11. A carbon dioxide recovery method of recovering carbon dioxide contained in air flowing through at least one of a first air flow passage and a second air flow passage by using an adsorbent that is configured to adsorb carbon dioxide, the carbon dioxide recovery method comprising:
- a switching step of switching a transport path of the adsorbent between a state in which the adsorbent is transported through a first transport path via the first air flow passage, a state in which the adsorbent is transported through a second transport path via the second air flow passage, and a state in which the adsorbent is transported through both the first transport path and the second transport path, based on a measurement result of a parameter which contributes to an adsorption efficiency of carbon dioxide by the adsorbent in air;
- an adsorbing step of transporting the adsorbent through the transport path switched in the switching step and bringing air flowing through at least one of a first air flow passage and a second air flow passage into contact with the adsorbent to adsorb carbon dioxide onto the adsorbent;
- a separation step of separating the carbon dioxide from the adsorbent which has adsorbed the carbon dioxide in the adsorbing step; and
- a recovering step of recovering the carbon dioxide separated in the separation step.

12. The carbon dioxide recovery method according to Claim 11,
further comprising:
- a storage step of storing, in a storage unit, the adsorbent from which the carbon dioxide has been separated in the separation step,
wherein the adsorbing step and the separation step are performed at the same time by using the adsorbent stored in the storage unit.
